# NEUE EUROPÄISCHE PATENTSCHRIFT

(11) **EP 2 372 126 B2**
(45) Veröffentlichungstag und Bekanntmachung des Hinweises auf die Entscheidung über den Einspruch: **20.07.2022**
(45) Hinweis auf die Patenterteilung: 20.04.2016
(21) Anmeldenummer: 11152989.7
(22) Anmeldetag: 02.02.2011
(51) Int. Cl.: F02B 37/18, F02B 67/10, F01N 13/08, F01D 17/10, F02B 39/00

(54) **Abgaskrümmer-Turbolader-Anordnung für eine Kraftfahrzeug-Brennkraftmaschine**
Exhaust manifold turbocharger assembly for a motor vehicle combustion engine
Agencement de turbosoufflante et collecteur de gaz d'échappement pour un moteur à combustion interne de véhicule automobile

(30) Priorität: 30.03.2010 DE 102010013367
(43) Veröffentlichungstag der Anmeldung: 05.10.2011
(73) Patentinhaber: Bayerische Motoren Werke Aktiengesellschaft, 80809 München (DE)
(72) Erfinder: Gutzer, Ulrich, 80937 Muenchen (DE); Verdoorn, Werner, 82256 Fuerstenfeldbruck (DE)

(56) Entgegenhaltungen:
- EP-A1- 1 541 826
- EP-A1- 2 143 925
- EP-A2- 1 384 857
- US-A- 5 673 559
- US-A- 6 079 210

## Beschreibung

Die Erfindung betrifft eine Abgaskrümmer-Turbolader-Anordnung für eine Kraftfahrzeug-Brennkraftmaschine umfassend eine abgasantreibbare Turbine, ein gemeinsames Abgaskrümmer-Turbolader-Gehäuse sowie einen Bypass-Kanal zur Umgehung der Turbine und eine Bypass-Ventil-Einrichtung (Wastegate) zum Regeln eines Bypass-Stroms.

Die deutsche Patentanmeldung mit dem Aktenzeichen 10 2009 057 645.2 betrifft einen Abgaskrümmer für eine Brennkraftmaschine, in den ein Turbinengehäuse eines Abgasturboladers integriert ist.

Um den Ladedruck von Abgasturboladern zu regeln, ist es allgemein bekannt, einen Bypass-Kanal zur Umgehung der Turbine und eine Bypass-Ventil-Einrichtung (Wastegate) zum Regeln eines Bypass-Stroms vorzusehen. Dabei erfolgt eine Betätigung der im Bypass-Kanal angeordneten Bypass-Ventil-Einrichtung mittels eines baulich gesondert angeordneten Aktuators, der mittels einer Koppelstange mit einem Stellglied der Bypass-Ventil-Einrichtung kinematisch verbunden ist. Eine derartige Anordnung geht beispielsweise aus der JP 59153921 A oder EP 1 384 857 A2 hervor.

Abgesehen von dem hohen Bauaufwand ergibt sich bei einer derartigen Anordnung aufgrund der bewegten Massen sowie spielbehafteter Schnittstellen eine reduzierte Dynamik.

Aufgabe der Erfindung ist es daher, eine eingangs genannte Abgaskrümmer-Turbolader-Anordnung bereit zu stellen, bei der der Bauaufwand verringert ist und die eine besonders hohe Dynamik aufweist.

Die Lösung der Aufgabe erfolgt mit einer Abgaskrümmer-Turbolader-Anordnung mit den Merkmalen des Anspruchs 1.

Mit dieser Anordnung wird eine kostengünstige, bauraumminimierte und funktionsoptimale Abgaskrümmer-Turbolader-Anordnung mit Bypass-Ventil-Einrichtung zur Verfügung gestellt, die aufgrund geringer Trägheit sowie durch Gelenkspiel- und reibungsentfall eine besonders schnelle Verstellung der Bypass-Ventil-Einrichtung ermöglicht, sodass sich beim Betrieb der Brennkraftmaschine Verbrauchsvorteile ergeben. Darüber hinaus kann über das Aktuator-Gehäuse die Welle zur Verbindung des Aktuators mit dem Stellglied sehr gut abgedichtet werden.

Besonders zu bevorzugende Ausführungen und Weiterbildungen der Erfindung sind Gegenstand der Unteransprüche.

Erfindungsgemäß ist der Aktuator eine elektrischer Rotationsantrieb und das Stellglied eine Klappe. Einem ebenfalls bevorzugten Ausführungsbeispiel zufolge ist das Abgaskrümmer-Turbolader-Gehäuse kühlbar.

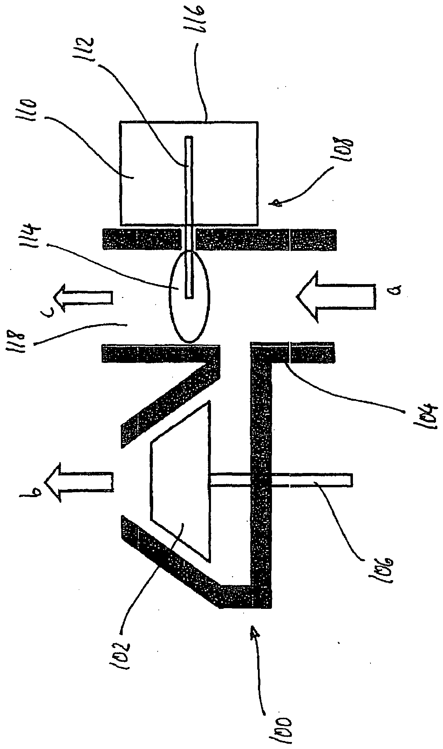

Nachfolgend ist ein besonders zu bevorzugendes Ausführungsbeispiel der Erfindung unter Bezugnahme auf die einzige Figur, die schematisch und beispielhaft eine erfindungsgemäße Abgaskrümmer-Turbolader-Anordnung für eine Kraftfahrzeug-Brennkraftmaschine und eine Bypass-Ventil-Einrichtung zeigt, näher erläutert.

Die hier nicht weiter dargestellte Kraftfahrzeug-Brennkraftmaschine umfasst wenigstens einen Zylinder, insbesondere jedoch drei, vier oder sechs Zylinder in Reihenanordnung, zwei Zylinder in Boxer- oder Paralleltwinanordnung oder acht, zehn oder zwölf Zylinder in V-Anordnung.

Dem wenigstens einen Zylinder ist auslassseitig eine Abgaskrümmer-Anordnung zugeordnet, in der die Verbrennungsabgase abgeführt und gegebenenfalls die Abgase mehrerer Zylinder zusammengeführt werden. Der Abgaskrümmer ist ein Blechbauteil, das gegebenenfalls zumindest bereichsweise mehrwandig, insbesondere doppelwandig ausgeführt ist, ein Gussbauteil aus Stahl- oder Leichtmetall, insbesondere aus einer aluminium- oder magnesiumbasierten Legierung oder ein Kunststoffbauteil, insbesondere faserverstärkt.

Zur Leistungssteigerung ist die Brennkraftmaschine mit einer Abgasturbolader-Anordnung 100 ausgerüstet. Im Abgasstrom a, b ist eine Abgasturbine 102 angeordnet, die mittels einer Welle 106 mit einem Verdichter im Ansaugtrakt der Brennkraftmaschine verbunden ist. Damit wird die Energie des Abgases genutzt und der Gemischdurchsatz pro Arbeitstakt erhöht.

Grundsätzlich erhöht sich mit steigender Brennkraftmaschinen-Drehzahl aufgrund des Abgasstroms die Drehzahl der Abgasturbine 102 und des Verdichters, was zu einer Erhöhung des Gemischdurchsatzes und damit wiederum zu einer Steigerung der Brennkraftmaschinen-Drehzahl führt. Angesichts der Verdichter-Fördergrenze sowie mechanischer und thermischer Grenzen ist zur Ladedruck-Regelung ein die Abgasturbine 102 umgehender Bypass-Kanal 118 mit Bypass-Ventil-Einrichtung (Wastegate) 108 vorgesehen.

Abhängig von der Stellung der Bypass-Ventil-Einrichtung 108 kann ein Teilstrom c des Abgasstromes a an der Abgasturbine 102 vorbei geleitet werden, sodass nur noch ein Teilstrom b zum Antrieb der Abgasturbine 102 genutzt wird.

Die Abgasturbolader-Anordnung 100 ist derart zumindest teilweise in den Abgaskrümmer integriert, dass in einem gemeinsamen Abgaskrümmer-Turbolader-Gehäuse 104 Abgaskanäle, die Turbine 102 sowie der Bypass-Kanal 118 zur Umgehung der Turbine 102 angeordnet sind.

Die Bypass-Ventil-Einrichtung 108 umfasst als Aktuator 110 einen elektrischen Rotationsantrieb, der in einem Aktuator-Gehäuse 116 angeordnet ist. Mittels einer Welle 112 ist der Aktuator 110 direkt mit einem Stellglied 114 verbunden. Das Stellglied 114 ist zur Regelung des Bypass-Stroms c im Bypass-Kanal 118 angeordnet, wobei die Welle 112 durch eine Öffnung im Gehäuse 104 geführt ist. Das Stellglied 114 ist vorliegend als Klappe ausgeführt, die dem Querschnitt des Bypass-Kanals 118 so angepasst ist, dass sie diesen gegebenenfalls vollständig verschließen kann. Das Aktuator-Gehäuse 116 ist unmittelbar mit dem Abgaskrümmer-Turbolader-Gehäuse 104 verschraubt, wobei zwischen Aktuator-Gehäuse 116 und Turbolader-Gehäuse 104 eine Dichtung vorgesehen ist. Die Bypass-Ventil-Einrichtung 108 ist an der erforderlichen Stelle am Bypass-Kanal 118 vorgesehen.

Mit der erfindungsgemäßen Abgaskrümmer-Turbolader-Anordnung 100 ist in vorteilhafter Weise ein kombiniertes Gehäuse wasserkühlbar, die Anordnung eignet sich daher besonders für eine direkte Anbindung des Stellaktuators 110, was in Verbindung mit einem ungekühlten Gehäuse aufgrund hoher Gehäusewand-Temperaturen nicht ohne Weiteres möglich wäre.

## Patentansprüche

1. Abgaskrümmer-Turbolader-Anordnung(100) für eine Kraftfahrzeug-Brennkraftmaschine umfassend eine abgasantreibbare Turbine (102), ein gemeinsames Abgaskrümmer-Turbolader-Gehäuse (106) sowie einen Bypass-Kanal (118) zur Umgehung der Turbine (102) und eine Bypass-Ventil-Einrichtung (108) zum Regeln eines Bypass-Stroms (c),
wobei
die Bypass-Ventil-Einrichtung (108) einen Aktuator (110), ein Aktuator-Gehäuse (116) und ein im Bypass-Kanal (118) angeordnetes Stellglied (114) aufweist, **dadurch gekennzeichnet, dass** die Bypass-Ventil-Einrichtung eine Welle (112) zur direkten Verbindung des Aktuators (110) mit dem Stellglied (114) aufweist und wobei das Aktuator-Gehäuse (116) mit dem Abgaskrümmer-Turbolader-Gehäuse (104) im Bereich des Stellglieds (114) unmittelbar verschraubt ist, wobei zwischen Aktuator-Gehäuse (116) und Turbolader-Gehäuse (104) eine Dichtung vorgesehen ist, sodass mittels der Welle (112) der Aktuator (110) direkt mit dem Stellglied (114) verbunden ist, und wobei der Aktuator (110) ein elektrischer Rotationsantrieb und das Stellglied (114) eine Klappe ist.

2. Abgaskrümmer-Turbolader-Anordnung (100) nach Anspruch 1, **dadurch gekennzeichnet, dass** das Abgaskrümmer-Turbolader-Gehäuse (104) kühlbar ist.

## Claims

1. Exhaust manifold turbocharger arrangement (100) for an internal combustion engine of a motor vehicle, comprising a turbine (102) which can be driven by exhaust gas, a common exhaust manifold turbocharger housing (106) and a bypass channel (118) for bypassing the turbine (102) and a bypass valve device (108) for controlling a bypass flow (c), wherein the bypass valve device (108) has an actuator (110), an actuator housing (116) and a control element (114) which is arranged in the bypass channel (118), **characterized in that** the bypass valve device has a shaft (112) for connecting the actuator (110) directly to the control element (114) and wherein the actuator housing (116) is screwed directly to the exhaust manifold turbocharger housing (104) in the region of the control element (114), wherein a seal is provided between the actuator housing (116) and the turbocharger housing (104), with the result that the actuator (110) is connected directly to the control element (114) by means of the shaft (112), and wherein the actuator (110) is an electrical rotary drive and the control element (114) is a flap.

2. Exhaust manifold turbocharger arrangement (100) according to Claim 1, **characterized in that** the exhaust manifold turbocharger housing (104) can be cooled.

## Revendications

1. Ensemble collecteur de gaz d'échappementturbocompresseur à suralimentation (100) destiné à un moteur à combustion interne de véhicule comprenant une turbine (102) pouvant être entraînée par les gaz d'échappement, un carter de collecteur de gaz d'échappement et de turbocompresseur à suralimentation commun (106) ainsi qu'un canal de dérivation (118) destiné à contourner la turbine (102) et un dispositif de soupape de dérivation (108) destiné à régler le flux dérivé (c),
le dispositif de soupape de dérivation (108) comprenant un actionneur (110), un carter d'actionneur (116) et un élément de réglage (114) disposé dans le canal de dérivation (118), **caractérisé en ce que** le dispositif de soupape de dérivation comprend un arbre (112) destiné à relier l'actionneur (110) à l'élément de réglage (114), le carter d'actionneur (116) étant vissé directement au carter de collecteur de gaz d'échappement et de turbocompresseur à suralimentation (104) dans la zone de l'élément de réglage (114), une garniture d'étanchéité étant prévue entre le carter d'actionneur (116) et le carter de turbocompresseur à suralimentation (104) de sorte que l'actionneur (110) soit relié directement à l'élément de réglage (114) au moyen de l'arbre (112), et l'actionneur (110) étant un entraînement en rotation électrique et l'élément de réglage (114) étant un clapet.

2. Ensemble collecteur de gaz d'échappementturbocompresseur à suralimentation (100) selon la revendication 1, **caractérisé en ce que** le carter de collecteur de gaz d'échappement et de turbocompresseur à suralimentation (104) peut être refroidi.
